Europäisches Patentamt

European Patent Office

Office européen des brevets

(19)

(11) Veröffentlichungsnummer: **0 153 690**
**B1**

(12) **EUROPÄISCHE PATENTSCHRIFT**

(45) Veröffentlichungstag der Patentschrift: **02.01.91**

(51) Int. Cl.⁵: **B 60 N 2/28**

(21) Anmeldenummer: **85101823.4**

(22) Anmeldetag: **20.02.85**

(54) **Sicherheitssitz für Kinder in Kraftfahrzeugen.**

(30) Priorität: **28.02.84 DE 3407109**

(43) Veröffentlichungstag der Anmeldung:
**04.09.85 Patentblatt 85/36**

(45) Bekanntmachung des Hinweises auf die
Patenterteilung:
**02.01.91 Patentblatt 91/01**

(84) Benannte Vertragsstaaten:
**AT CH DE FR GB IT LI NL SE**

(56) Entgegenhaltungen:
**GB-A-2 047 527**
**US-A-3 136 579**
**US-A-4 143 915**

(73) Patentinhaber: **Schräder, Margarete**
**Kirchplatz 6**
**D-8606 Hirschaid (DE)**

(72) Erfinder: **Schräder, Margarete**
**Kirchplatz 6**
**D-8606 Hirschaid (DE)**

(74) Vertreter: **Wilcken, Thomas, Dipl.-Ing. et al**
**Musterbahn 1**
**D-2400 Lübeck (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einem Sicherheitssitz für Kinder in Kraftfahrzeugen gemäß dem Oberbegriff von Patentanspruch 1.

Während Kinder im Alter ab etwa 12 Jahren im allgemeinen die üblichen und eigentlich für Erwachsene vorgesehene Sicherheitsgurtsysteme eines Fahrzeuges benutzen können, müssen jüngere Kinder zur Vermeidung von Verletzungsgefahren wegen nicht passender Gurte entweder mit einem Sicherheitssitz oder mit einem speziell an die Körpergröße angepaßten Gurtsystem gesichert werden.

Bei Verwendung eines Sicherheitssitzes hat man die Möglichkeit, diesen mit einem eigenen Gurtsystem auszustatten (DE-A-1937610) und mit weiteren Gurten und Beschlägen an der Karosserie des Fahrzeuges zu befestigen. Eine solche Lösung ist allerdings relativ teuer, so daß es aus Kostengründen häufig vorgezogen wird, einen Sicherheitssitz so zu gestalten, daß er in Verbindung mit einem schon serienmäßig im Fahrzeug vorhandenen Gurtsystem verwendet werden kann, so daß also vom Benutzer nur der Sitz beschafft werden muß. Lösungen für Sicherheitssitze dieser Art sind beispielsweise in den DE-A-1455833 und 2514769 sowie in der GB-A-2047527 dargestellt und beschrieben.

Auch wenn man in der Praxis bisher relativ gute Erfahrungen mit solchen Sicherheitssitzen machen konnte, haben sich doch gewisse Probleme ergeben, die vor allem mit der richtigen und für das Kind körpergerechten Führung der Gurte der meist verwendeten Dreipunktgurtsysteme in Zusammenhang stehen. Diese Gurtsysteme bestehen aus einem Beckengurt und einem diagonal über Brust und Schulter geführten Schultergurt, wobei beide Enden dieser Gurte auf einer Seite des Sitzes fest oder über eine Schlaufe mit einem Gurtschloß verbunden sind.

Der richtige Sitz des Beckengurtes kann normalerweise bei sinnvoller Konstruktion des Sitzes und Anbringung der zugehörigen Gurtbeschläge gewährleistet werden. Jedoch gilt dies in vielen Fällen nicht im Hinblick auf den Schultergurt, da dieser je nach Höhe des auf dem Sitzpolster eines Kraftfahrzeuges stehenden Sicherheitssitzes und nach Körpergröße des Kindes häufig zu nahe am Halsbereich des Kindes entlang oder gar über Teilbereich des Gesichtes verlaufen wird. Es ist verständlich, daß hierdurch bei hohen Verzögerungen des Fahrzeuges, beispielsweise durch starkes Bremsen oder bei Auffahrunfällen, eine beträchtliche Verletzungsgefahr besteht, sofern Körper und Kopf des Kindes hierbei gegen die rückhaltenden Gurte geschleudert werden.

In Kenntnis dieser Gefahren wurde schon vorgeschlagen, durch einen zusätzlichen Rückengurt dafür zu sorgen, daß der mit dem Rückengurt zur Seite hin gezogene Schultergurt nicht zu nahe am Hals liegt. Der gleiche Zweck wird mit einer ebenfalls bekannten Lösung verfolgt, bei der in Nähe der Schulter, über die der Schultergurt verläuft, am Sitz selbst oder unabhängig hiervon eine Führung bzw. ein gesonderter Beschlag vorgesehen wird, die bzw. der den Schultergurt seitlich am gefährdeten Hals- und Gesichtsbereich vorbei umlenken soll. Auch dieses Prinzip hat seine Probleme insofern, als offensichtlich eine Anpassung und einigermaßen gute, körpergerechte Gurtführung nur in bezug auf ein Kind in bestimmter Größe erreicht werden können. Außerdem besteht die Gefahr, daß die betreffenden Führungen und Beschläge für das Schultergurtband hohen Belastungen nicht standhalten werden.

Ferner sind Sicherheitssitze bekannt, bei denen die Sitzhöhe mit einem Adapter eingestellt werden kann (DE-A-2738787, 2751319 und GB-A-2047527). Die Adapter dieser Sitze sind aber relativ aufwendig konstruiert und unbequem zu bedienen.

Die Aufgabe der Erfindung besteht in der Verbesserung eines für fahrzeugeigene Gurtsysteme verwendbaren Sicherheitssitzes, bei dem sich die Sitzflächenhöhe bei einfacher Ausbildung, leichter Handhabebarkeit und relativ geringem Aufwand des Adapters in definierten, feinen Stufen einstellen läßt, um immer eine optimale Anpassung des Sitzflächenniveaus des Sitzes im Kraftfahrzeug an die verschiedenen Körpergrößen von Kindern zu erreichen.

Die Lösung dieser Aufgabe ist in dem Patentanspruch 1 bzw. 3 angeführt.

Bei dem Sicherheitssitz nach der Erfindung, der mit dem fahrzeugeigenen Gurtsystem zu sichern ist, läßt sich die Sitzflächenhöhe des Sitzelementes im Verhältnis zum Unterbau und zur Standfläche — das ist im allgemeinen die Oberfläche des Rücksitzpolsters von Kraftfahrzeugen — mit relativ wenigen, jeweils unterschiedlich hohen Distanzelementen durch entsprechende Kombination feinstufig einstellen mit der Folge, daß in Abhängigkeit von der Größe des jeweils zu sichernden Kindes vor allem eine exakte Anpassung der Position des Kindes an den Schultergurtverlauf erzielt wird, wobei die Lage bzw. der Verlauf des Beckengurtes relativ zur Sitzfläche des Sitzes unverändert bleibt und damit seine optimale Position behält.

Des weiteren ist der Sicherheitssitz einfach in der Ausbildung und somit sehr kostengünstig herzustellen sowie einfach zu handhaben, so daß die Bedienbarkeit keine Schwierigkeiten bereitet. Die kostengünstige Herstellung des Sicherheitssitzes ist auch dadurch bedingt, daß für einen gegebenen Höhenverstellbereich für die Sitzfläche, innerhalb dessen feinstufig eingestellt werden kann, trotzdem relativ wenig Distanzelemente erforderlich sind.

Bevorzugte Ausführungsformen des erfindungsgemäßen Sicherheitssitzes sind in den anderen Patentansprüchen aufgeführt.

Die Erfindung ist nachstehend anhand zweier in den anliegenden Zeichnungen dargestellter Ausführungsbeispiele näher erläutert Es zeigen:

Figur 1 eine perspektivische Ansicht eines Sicherheitssitzes, und zwar schräg von vorn und oben gesehen,

Figur 2 einen Schnitt durch die Anordnung und Verbindung von Distanzelementen zwischen Sitzelement und Unterbau nach Figur 1, jedoch in größerem Maßstab und mit anders ausgebildeter Befestigung der Armlehnen,

Figur 3 eine perspektivische Ansicht eines anderen Sicherheitssitzes, und zwar schräg von vorn und oben gesehen,

Figur 4 eine Aufsicht auf einen Sicherheitssitz nach Figur 3 bei abgenomenem Sitzelement,

Figur 5 einen teilweisen Schnitt gemäß Schnittlinie V-V der Figur 4 durch einen Wandbereich des Sicheiheitssitzes,

Figur 6 die Aufsicht auf ein Distanzelement, wie es anstelle des in Figur 4 gezeigten Elementes für einen Sitz nach Figur 3 verwendbar ist, und

Figur 7 einen teilweisen Schnitt durch das Distanzelement nach Figur 6 gemäß der Schnittlinie VII-VII.

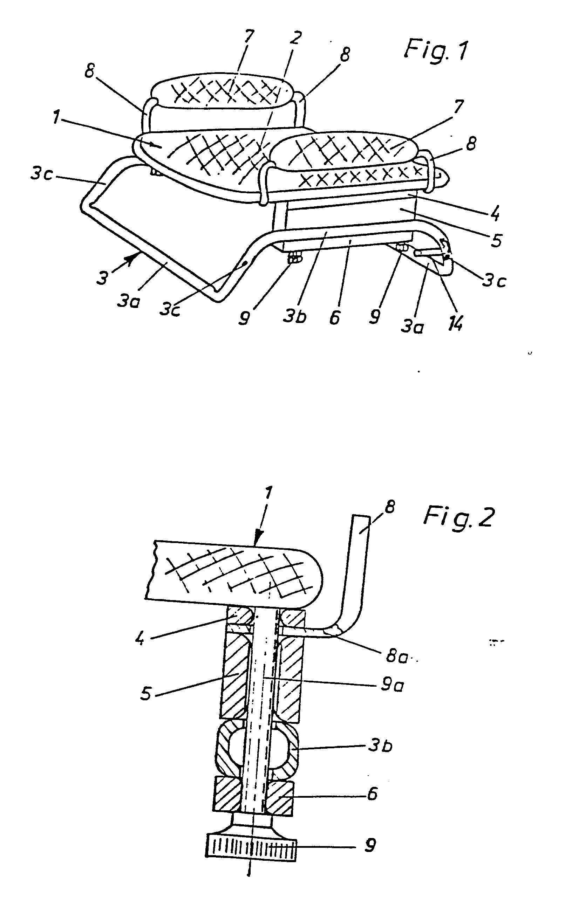

Der in Figur 1 gezeigte Sicherheitssitz besteht im wesentlichen aus dem Sitzelement 1 mit der Sitzfläche 2 und dem Unterbau 3, der in diesem Fall ein Gestell aus entsprechend gebogenem Metallrohr ist. Der Adapter besteht aus drei stapelbaren Distanzelementen 4, 5 und 6, von denen hier nur die beiden Elemente 4 und 5 für die Sitzhöheneinstellung eingesetzt wurden, während das Distanzelement 6 auf Vorrat für eine spätere weitere Sitzhöhenverstellung gehalten wird. Auf der anderen Seite des Sitzelementes 1 ist ein gleicher, in der Darstellung nicht sichtbarer Satz Distanzelemente in gleicher Anordnung vorgesehen.

Die Distanzelemente sind unterschiedlich hoch bzw. dick und haben die Form von Stäben bzw. länglichen Platten mit rechteckigem Querschnitt. Wenn man davon ausgeht, daß die Sitzfläche 2 bei direkter Anbringung des Sitzelementes 1 auf dem Gestell 3 eine Höhe Ho von beispielsweise 100 mm über der Auflagefläche des Sitzes hat und daß die drei Distanzelemente Dickenmaße von 10 mm, 20 mm und 40 mm haben, könnte die Sitzhöhe dementsprechend um insgesamt 70 mm vergrößert werden, falls alle Distanzelemente zur Anwendung kommen. Wenn man weiter berücksichtigt, daß nur jeweils eines der Distanzelemente oder auch noch drei verschieden zusammengestellte Distanzelementenpaare anwendbar sind, lassen sich also außer der Grundhöhe Ho weitere sieben Sitzhöhen Hx stufenweise zwischen 100 und 170 mm einstellen, wobei die kleinste Verstellstufe jeweils 10 mm betragen kann.

Das bei dieser Ausführungsform als Unterbai benutzte Gestell 3 hat zwei querverlaufende Holme 3a, mit denen der Sicherheitssitz auf dem Rücksitzpolster des Fahrzeuges steht, und zwei oben und seitlich längsverlaufende Holme 3b. Die vier Holme sind mit schräg nach unten und außen verlaufenden Stegen 3c verbunden. Falls keine Distanzelemente benutzt werden, stützen die beiden Längsholme 3b das mit ihnen verbundene Sitzelement 1 direkt ab, während sonst, wie es die Figur 1 zeigt, eine indirekte Abstützung über die zwischen den Längsholmen und dem Sitzelement angeordneten Distanzelemente erfolgt.

An den Längsseiten des Sitzelementes 1 sind Armlehnen 7 vorgesehen, die von Stützen 8 getragen werden, deren in der Darstellung nach Figur 1 nicht erkennbare Füße unterhalb des Sitzelementes mit diesem durch Schrauben verbunden sind. Bei diesem Ausführungsbeispiel ist die Höhe der Armlehnen 7 in Bezug auf die Sitzfläche 2 von vornherein festgelegt. Eine Verstellmöglichkeit für die Armlehnen zeigt die Figur 2, die im übrigen einen Schnitt durch die Distanzstücke im Bereich ihrer Verbindung mit dem Gestell 3 und dem Sitzelement 1 gemäß Figur 1 darstellt.

Man erkennt, daß die Distanzelemente 4, 5 und 6 und auch die Holme 3b im erwähnten Verbindungsbereich fluchtende Löcher haben, durch die der Gewindeschaft 9a einer Schraube 9 gesteckt ist, welche mit ihrem Kopf unten am Distanzstück 6 anliegt und mit dem Ende ihres Gewindeschaftes z.B. in einer im Sitzelement 1 eingelassenen und nicht weiter dargestellten Gewindebuchse verschraubt ist.

Wie bereits erwähnt wurde, wird die Sitzhöhe beim Sicherheitssitz nach den Figuren 1 und 2 durch die Grundhöhe Ho und die Summe der Höhen bzw. Dicken der beiden Distanzelemente 4 und 5 bestimmt. Wenn man die Sitzhöhe noch um die Dicke des Distanzelementes 6 vergrößern will, können nach Lösen der Schrauben 9 alle drei Distanzelemente einheitlich zu einem Satz gestapelt werden, der dann zwischen dem Holm 3b und dem Sitzelement 1 angeordnet ist und mit dem Schrauben 9 in seiner Position fixiert wird. Ausgehend von Figur 2 kann umgekehrt eine Reduzierung der Sitzhöhe um die Dicke des Distanzelementes 5 in der Weise erfolgen, daß dieses Element zusammen mit dem Distanzelement 6 unterhalb des Holmes 3b angeordnet wird, so daß einerseits nur das Distanzelement 4 zur Sitzhöheneinstellung beiträgt und andererseits die nicht verwendeten beiden Distanzelemente nicht verlorengehen können.

Einen weiteren Vorteil bietet die in Figur 1 gezeigte Lösung auch noch deshalb, weil sie eine Höhenverstellung der Armlehne 7 zuläßt, indem die Füße 8a der Stütze 8 von außen her wahlweise zwischen zwei benachbarte Distanzelemente, in Figur 2 sind dies die Elemente 4 und 5, oder auch zwischen das Distanzelement 6 und den Längsholm 3d bzw. zwischen das Distanzelement 4 und das Sitzelement 1 greifen können. Die Füße haben ebenfalls eine Bohrung, um sie mit dem durch diese Bohrung laufenden Gewindeschaft 9a festlegen zu können.

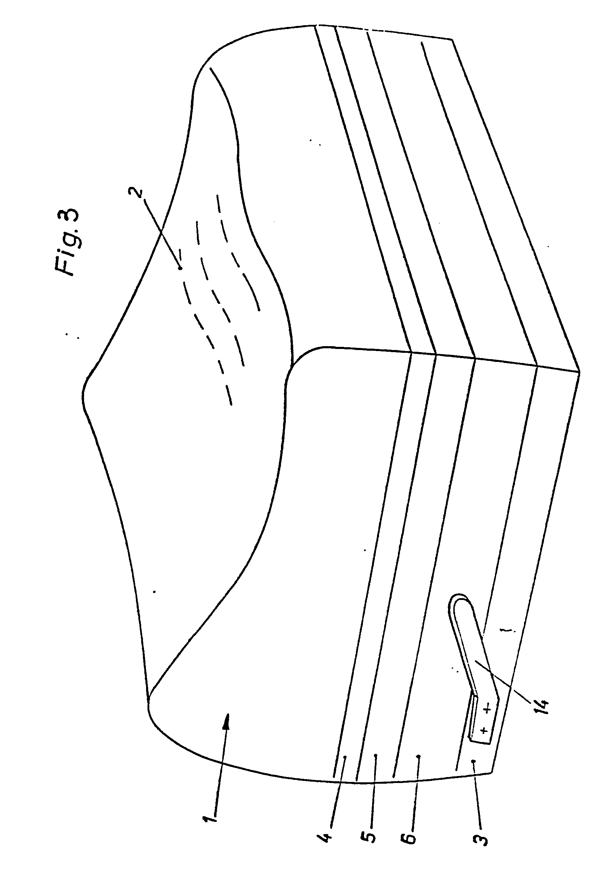

Der Sicherheitssitzgemäß Figur 3 hat im wesentlichen die Form eines Kastens mit dem oben angeordneten Sitzelement 1 und dem unten befindlichen Unterbau 3. Als Adapter zur Höhenverstellung der Sitzfläche 2 werden in diesem Fall auch drei verschieden hohe Distanzelemente 4, 5 und 6 verwendet, die beim gezeigten Ausführungsbeispiel alle zum Einsatz kommen, so daß der Sitz die größtmögliche Höhe hat. Durch Entfernen eines, zweier oder aller Distanzelemente kann die Sitzhöhe reduziert werden. Im übrigen ergibt sich die gleiche Vielfalt an Variationsmöglichkeiten wie bei dem in Figur 1 dargestellten Sicherheitssitz.

Das Sitzelement 1 nach Figur 3 ist hinsichtlich der Sitzfläche 2 den anatomischen Gegebenheiten entsprechend geformt. Die Konturen des Sitzelementes, der Distanzelemente und des Unterbaus sind zumindest im Bereich ihrer gegenseitigen Verbindungen deckungsgleich, wobei allerdings auch die Möglichkeit besteht, eine Seitenwand oder auch alle vier Seitenwände des Sitzes nach unten und außen geneigt verlaufen zu lassen.

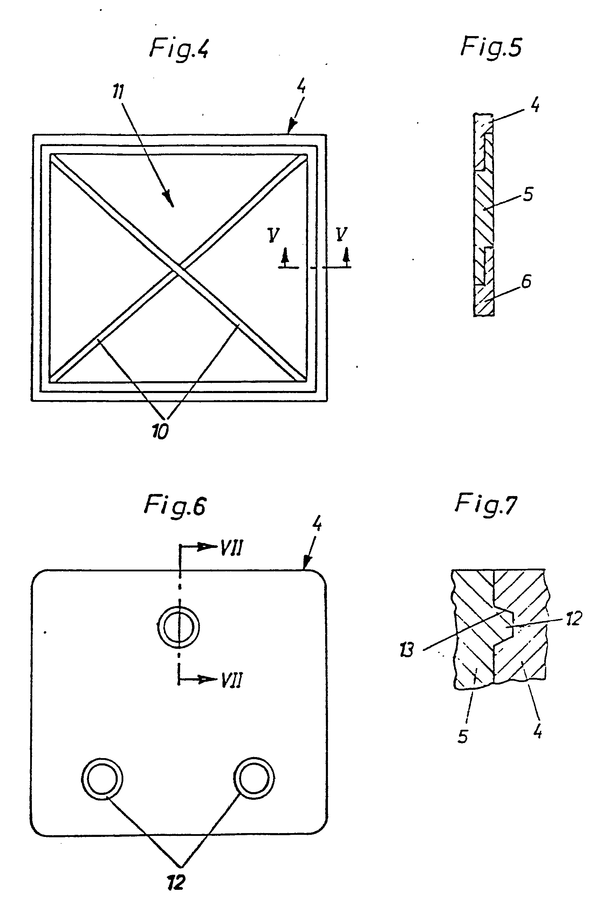

In der Figur 4 ist die Aufsicht auf den Sitz bei abgenommenem Sitzelement 1 gezeigt. Alle Distanzelemente bestehen im wesentlichen aus oben und unten offenen, rechteckigen Rahmen, die mit diagonal verlaufenden Streben 10 versteift sind. Der Unterbau hat einen geschlossenen Boden 11. Im übrigen greifen die Distanzelemente gemäß Figur 5 am Randbereich formschlüssig und bei entsprechend gewählter passung auch reibschlüssig ineinander ein. Auf gleiche Art können auch das Sitzelement 1 und der Unterbau 3 miteinander oder mit dem jeweils darüber bzw. darunter befindlichen Distanzelement verbunden sein. Andererseits könnte man auch an sich bekannte Rastverbindungen anwenden, um erforderlichenfalls einen stärkeren Zusammenhalt der jeweils lösbar zusammengestellten Teile zu erzielen.

Der Sicherheitssitz gemäß Figur 3 läßt sich auch insgesamt aus Hartschaumstoffkörpern herstellen, wobei dann die Distanzelemente 4, 5 und 6 und auch das Sitzelement 1 sowie der Unterbau 3 im wesentlichen plattenförmig ausgebildet sind und übereinander gestapelt werden können. Entsprechend den Figuren 6 und 7 sollten in diesem Fall die Verbindungen zwischen allen Teilen des Sitzes über einen Formschluß hergestellt werden, indem z.B. die Distanzelemente auf der Oberseite kegelstumpfförmige Zapfen 12 tragen und unmittelbar unter den Zapfen mit Ausnehmungen 13 versehen sind, so daß gestapelte Distanzelemente über Zapfen-Loch-Verbindungen zusammengehalten werden. In diesem Fall braucht dann natürlich der Unterbau 3 nur nach oben gerichtete Zapfen und das Sitzelement 1 nach unten gerichtete Ausnehmungen zu haben, und zwar in gleicher geometrischer Anordnung wie die Zapfen und Ausnehmungen bei den Distanzelementen.

Abweichend von der Darstellung nach Figur 3 könnte der Unterbau 3 bogenförmig ausgebildet werden, um seine Standfläche besser an das meist gewölbte Rücksitzpolster des Fahrzeuges anzupassen. Außerdem könnte im Sitzelement 1 noch ein Polster eingelassen werden. Wenn im übrigen der Sicherheitssitz aus Hartschaumstoffkörpern hergestellt ist, sollte zu deren Schutz gegen Beschädigung ein Überzug verwendet werden, der beispielsweise aus Textilmaterial besteht und den Sitz zumindest oben und an den vier Seiten abdeckt.

Unabhängig von der Art des jeweiligen Sicherheitssitzes ist es von besonderer Bedeutung, daß beiderseits des Sitzes Führungen 14, beispielsweise in Form von Stegen, Bügeln und dergleichen, vorgesehen werden, durch die der zwischen den Führungen und dem Unterbau nach oben verlaufende Beckengurt des Gurtsystems automatisch in die richtige Position im Verhältnis zum Körper des Kindes gebracht wird. Um dies unabhängig von der jeweils eingestellten Sitzhöhe zu erreichen, sollen die Führungen 14 den Darstellungen entsprechend Teweils seitlich und am hinteren Bereich des Unterbaus angebracht sein.

Abschließend wird noch darauf hingewiesen, daß im Rahmen der Erfindung auch noch sonstige Änderungen an den dargestellten und beschriebenen Sicherheitssitzen liegen. So könnten die Sitze am hinteren Ende noch mit einer Rückenlehne ausgerüstet werden. Außerdem können natürlich auch mehr oder weniger als drei Distanzelemente zur Sitzhöhenverstellung verwendet werden.

## Patentansprüche

1. Sicherheitssitz für Kinder in Kraftfahrzeugen, der in Verbindung mit einem serienmäßig im Fahrzeug installierten Sicherheitsgurtsystem verwendbar ist und im allgemeinen aus einem Sitzelement (1) mit der Sitzfläche für das Kind und aus einem das Sitzelement tragenden Unterbau (3) besteht, wobei die Sitzhöhe mit einem zwischen dem Sitzelement und der Standfläche des Sicherheitssitzes befindlichen Adapter aus mindestens einem Satz stapelbarer Distanzelemente (4, 5, 6) einstellbar ist und wobei die Höhe und die Anzahl der jeweils einzeln oder in Kombination zur Anwendung kommenden Distanzelemente das Maß der Sitzhöhenverstellung bestimmen, dadurch gekennzeichnet, daß die Distanzelemente (4, 5, 6) unterschiedlich hoch sind, daß der Unterbau (3) aus einem Gestell besteht, das mit zwei oberen seitlichen Holmen (3b) das Sitzelement (1) von unten abstützt, daß die Distanzelemente die Form von länglichen Platten haben und in ausgerichtet gestapeltem Zustand fluchtende Löcher aufweisen und daß die Gestellholme (3b) und das Sitzelement (1) über zumindest ein Distanzstück mittels Schrauben (9) verbindbar sind, die von unten jeweils durch ein Loch der Holme nach oben durch die Löcher der Distanzstücke verlaufen und mit ihren Enden im Sitzelement verschraubt sind.

2. Sicherheitssitz nach Anspruch 1, dadurch gekennzeichnet, daß oberhalb und beiderseits der Sitzfläche Armlehnen (7) vorgesehen sind, die von Stützen (8) getragen werden, daß die Füße (8a) der Stützen (8) wahlweise zwischen zwei benachbarten Distanzelementen (4, 5, 6) oder zwischen einem Distanzelement und dem Sitzelement (1) oder dem genannten Gestellholm (3b) befestigbar sind.

3. Sicherheitssitz für Kinder in Kraftfahrzeugen, der in Verbindung mit einem serienmäßig im Fahrzeug installierten Sicherheitsgurtsystem verwendbar ist und im wesentlichen aus einem Sitzelement (1) mit der Sitzfläche für das Kind und aus einem das Sitzelement tragenden Unterbau (3) besteht, wobei die Sitzhöhe mit einem zwischen dem Sitzelement und der Standfläche des Sicherheitssitzes befindlichen Adapter aus mindestens einem Satz stapelbarer Distanzelemente (4, 5, 6) einstellbar ist, wobei die Höhe und die Anzahl der jeweils einzeln oder in Kombination zur Anwendung kommenden Distanzelemente das Maß der Sitzhöhenverstellung bestimmen und wobei die Umfangsform der Distanzelemente und die Kontur des Unterbaus (3) des Sitzelementes (1) im Bereich ihrer gegenseitigen Verbindung deckungsgleich sind, dadurch gekennzeichnet, daß die Distanzelemente (4, 5, 6) unterschiedlich hoch sind, daß die Distanzelemente in Form von mit Versteifungen (10) versehenen Rahmen ausgebildet sind und daß das Sitzelement (1), der Unterbau (3) und die Distanzelemente (4, 5, 6) aus Hartschaumstoff bestehen und im gestapelten Zustand durch Formschluß (12, 13) verbunden sind.

4. Sicherheitssitz nach Anspruch 1 oder 3, dadurch gekennzeichnet, daß das Sitzelement (1) und der Unterbau (3) gemeinsam eine Sitzhöhe von etwa 100 mm ergeben und daß für drei zur Anwendung kommende Distanzelemente (4, 5, 6) Höhenmaße von etwa 10 mm, 20 mm und 40 mm vorgesehen sind.

5. Sicherheitssitz nach Anspruch 1 oder 3, dadurch gekennzeichnet, daß am Unterbau (3) Führungen (14) für den Beckengurt des Gurtsystems angeordnet sind.

## Revendications

1. Siège de sécurité pour enfants dans les véhicules automobiles, qui peut être utilisé en combinaison avec un système de ceintures de sécurité installé de série dans le véhicule, et qui de maniére générale se compose d'un élément d'assise (1) avec la surface d'assise pour l'enfant, et d'une structure de base (3) supportant l'élément d'assise, la hauteur d'assise étant réglable au moyen d'un adaptateur situé entre l'élément d'assise et la surface d'appui du siège de sécurité et constitué d'au moins un jeu d'élémentsentretoise (4, 5, 6) pouvant étre empilés, et, la hauteur et le nombre des éléments-entretoise utilisés dans chaque cas, individuellement ou en combinaison, déterminant la valeur du réglage de la hauteur d'assise, caractérisé en ce que les élémentsentretoise (4, 5, 6) sont de hauteur différente, en ce que la structure de base (3) est constituée par un châssis qui, avec deux longerons latéraux supérieurs (3b), supporte l'élément d'assise (1) par le dessous, en ce que les éléments-entretoise se présentent sous la forme de plaques allongées et comportent des trous qui sont alignés lorsque les éléments-entretoise sont alignés entre-eux à l'état empilé, et en ce que les longerons (3b) du châssis et l'élément d'assise (1) peuvent être assemblés par l'intermédiaire d'au moins une pièce-entretoise et au moyen de vis (9) qui s'étendent du bas vers le haut, respectivement au travers d'un trou des longerons et des trous des pièces-entretoise, et qui sont vissées par leurs extrémités, dans l'élement d'assise.

2. Siège de sécurité selon la revendication 1, caractérisé en ce que des accoudoirs (7), portés par des supports d'appui (8), sont prévus au-dessus et de part et d'autre de la surface d'assise, et en ce que les pieds (8a) des supports d'appui (8) peuvent être fixés, au choix, entre deux éléments-entretoise voisins (4, 5, 6), ou entre un élément-entretoise et l'élément d'assise (1) ou le longeron de châssis (3b) mentionné.

3. Siège de sécurité pour enfants dans les véhicules automobiles, qui peut être utilisé en combinaison avec un système de ceintures de sécurité installé de série dans le véhicule, et qui se compose essentiellement d'un élément d'assise (1) avec la surface d'assise pour l'enfant, et d'une structure de base (3) supportant l'élément d'assise, la hauteur d'assise étant réglable au moyen d'un adaptateur situé entre l'élément d'assise et la surface d'appui du siège de sécurité, et constitué d'au moins un jeu d'éléments-entretoise (4, 5, 6) pouvant étre empilés, la hauteur et le nombre des éléments-entretoise utilisés dans chaque cas, individuellement ou en combinaison, déterminant la valeur du réglage de la hauteur d'assise, et, la forme périphérique des éléments-entretoise et le contour de la structure de base (3) de l'élément d'assise (1) coïncidant entre-eux dans la zone de leur liaison réciproque, caractérisé en ce que les éléments-entretoise (4, 5, 6) sont de hauteur différente, en ce que les éléments-entretoise sont réalisés sous la forme de cadres munis de renforts (10), et en ce que l'élément d'assise (1), la structure de base (3) et les éléments-entretoise (4, 5, 6) sont réalisés en une mousse rigide et sont reliés entreeux, à l'état empilé, par une liaison par complémentarité de formes (12, 13).

4. Siège de sécurité selon la revendication 1 ou 3, caractérisé en ce que l'élément d'assise (1) et la structure de base (3) conduisent ensemble à une hauteur d'assise d'environ 100 mm, et en ce que des hauteurs d'environ 10 mm, 20 mm et 40 mm sont prévues pour trois éléments-entretoises (4, 5, 6) venant à être utilisés.

5. Siège de sécurité selon la revendication 1 ou 3, caractérisé en ce que des guidages (14), pour la ceinture abdominale du système de ceintures, sont prévus sur la structure de base (3).

## Claims

1. Safety seat for children in motor vehicles which can be used in conjunction with a safety belt system fitted to the vehicle as standard and generally consists of a seat element (1) with the seat surface for the child and a support (3) for the seat element, in which the seat height can be adjusted by means of an adapter located between the seat element and the base of the safety seat and consisting of at least one set of stackable distance pieces (4, 5, 6) and the height and the number of these distance pieces used alone or in combination determine the extent of the seat height adjustment, characterised in that the distance pieces (4, 5, 6) are of different heights, the base (3) consists of a frame which supports the seat element (1) from below with two upper side bars (3b), the distance pieces are in the form of oblong plates and when they are stacked straight they have holes which are aligned, and the side bars (3b) and the seat element (1) can be connected by at least one distance piece by means of screws (9) each of which runs from below through a hole in the side bars and upwards through the holes in the distance pieces, with their ends screwed into the seat element.

2. Safety seat as claimed in claim 1, characterised in that armrests (7) borne by supports (8) are provided above and on both sides of the seat surface, the feet (8a) of the supports (8) can be fixed as required between two adjacent distance pieces (4, 5, 6) or between one distance piece and the seat element (1) or the said side bar (3b).

3. Safety seat for children in motor vehicles which can be used in conjunction with a safety belt system fitted to the vehicle as standard and essentially consists of a seat element (1) with the seat surface for the child and a support (3) for the seat element, in which the seat height can be adjusted by means of an adapter located between the seat element and the base of the safety seat and consisting of at least one set of stackable distance pieces (4, 5, 6) and the height and the number of these distance pieces alone or in combination determine the extent of the seat height adjustment, and in which the peripheral shape of the distance pieces and the contour of the base (3) of the seat element (1) coincide in the region of their reciprocal connection, characterised in that the distance pieces (4, 5, 6) are of different heights, the distance pieces are constructed in the form of a frame provided with reinforcements (10), and the seat element (1), the base (3) and the distance pieces (4, 5, 6) are made from hard foam material and in the stacked state are connected by form locking (12, 13).

4. Safety seat as claimed in claims 1 or 3, characterised in that the seat element (1) and the base (3) together provide a seat height of approximately 100 mm and that heights of approximately 10 mm, 20 mm and 40 mm are provided for three distance pieces (4, 5, 6) which are used.

5. Safety seat as claimed in claims 1 or 3, characterised in that guides (14) for the lap strap of the belt system are provided on the base (3).

Fig. 1

Fig. 2

Fig. 3

EP 0 153 690 B1

*Fig.4*

*Fig.5*

*Fig.6*

*Fig.7*